# EUROPEAN PATENT APPLICATION

(11) **EP 2 123 356 A1**
(43) Date of publication of application: **25.11.2009**
(21) Application number: 09006456.9
(22) Date of filing: 13.05.2009
(51) Int. Cl.: B01J 29/068, B01J 29/072, B01J 29/076, B01J 29/18, B01J 29/40, B01J 29/50, B01J 29/60, B01J 29/65, B01J 29/78, B01J 35/04, B01J 35/06, B01D 53/92

(54) **Honeycomb structure**

(30) Priority: 20.05.2008 WO PCT/JP2008/059269
(71) Applicant: Ibiden Co., Ltd., Ogaki-shi, Gifu 503-8604 (JP)
(72) Inventor: Ohno, Kazushige, Ibi-gun Gifu 501-0695 (JP); Kunieda, Masafumi, Ibi-gun Gifu 501-0695 (JP); Ido, Takahiko, Ibi-gun Gifu 501-0695 (JP)
(74) Representative: HOFFMANN EITLE

(57) **Abstract**

A honeycomb structure includes multiple pillar honeycomb units joined by interposing an adhesive layer. The honeycomb units each include zeolite and an inorganic binder and have multiple cells separated by a cell wall. The cells extend from a first end face to a second end face of the honeycomb unit along a longitudinal direction thereof. The adhesive layer includes zeolite. The ratio of the coefficient of thermal expansion of the adhesive layer to the coefficient of thermal expansion of each of the honeycomb units is in the range of 0.8 to 1.2.

## Description

### BACKGROUND OF THE INVENTION

### 1. Field of the Invention

The present invention relates to honeycomb structures for exhaust gas treatment.

### 2. Description of the Related Art

A large number of techniques have been developed in relation to conversion of automobile exhaust gas. With an increase in traffic, however, countermeasures taken against exhaust gas have hardly been satisfactory. Not only in Japan but also globally, automobile emission control is going to be further tightened. Especially, control on NOx in diesel emissions has been getting extremely strict. NOx reduction, which conventionally has been achieved by controlling the combustion system of an engine, has become too much to be handled by that alone. As a diesel NOx conversion system responding to such a problem, NOx reduction systems using ammonia as a reducing agent (referred to as "SCR systems") have been proposed. A honeycomb structure is known as a catalyst carrier used in such systems.

This honeycomb structure has, for example, multiple cells (through holes) extending from one to another of the end faces of the honeycomb structure along its longitudinal directions, and these cells are separated from each other by cell walls supporting a catalyst. Accordingly, when exhaust gas is caused to flow through such a honeycomb structure, NOx included in the exhaust gas is converted by the catalyst supported by the cell walls. Therefore, it is possible to treat the exhaust gas.

In general, the cell walls of such a honeycomb structure are formed of cordierite, and for example, zeolite (with iron or copper introduced through ion exchange) is supported by these cell walls as a catalyst. In addition, it has been proposed to form a honeycomb structure using zeolite for cell walls (for example, Patent Document 1).
[Patent Document 1] International Publication Number WO 06/137149 A1

Such a honeycomb structure as described above is manufactured by joining a predetermined number of ceramic units (honeycomb units) by interposing an adhesive layer and thereafter cutting this joined body into a desired shape.

However, the conventional honeycomb structure has the problem of frequent occurrence of peeling or generation of cracks at the interface of the honeycomb units and the adhesive layer due to the difference in the coefficient of thermal expansion and the like between the honeycomb units and the adhesive layer during use of the honeycomb structure, that is, while high-temperature exhaust gas is being caused to flow through the honeycomb structure.

### SUMMARY OF THE INVENTION

The present invention is made in view of this problem, and has an object of providing a honeycomb structure less likely to have peeling or cracks caused at the interface of its honeycomb units and adhesive layer.

According to one embodiment of the present invention, a honeycomb structure includes multiple pillar honeycomb units joined by interposing an adhesive layer, the honeycomb units each including zeolite and an inorganic binder and having multiple cells separated by a cell wall, the cells extending from a first end face to a second end face of the honeycomb unit along a longitudinal direction thereof, wherein the adhesive layer includes the zeolite and the ratio of the coefficient of thermal expansion of the adhesive layer to the coefficient of thermal expansion of each of the honeycomb units is in the range of 0.8 to 1.2.

The zeolite included in each honeycomb unit may be ion-exchanged with one of Fe, Cu, Ni, Co, Zn, Mn, Ti, Ag, and V.

The zeolite included in each honeycomb unit may be one of β-zeolite, zeolite Y, ferrierite, zeolite ZSM-5, mordenite, faujasite, zeolite A, and zeolite L.

The ratio by weight of silica to alumina may be 30 to 50 in the zeolite included in each honeycomb unit.

Each honeycomb unit may further include at least one selected from the group consisting of alumina, titania, silica, zirconia, ceria, mullite, and precursors thereof.

The inorganic binder included in each honeycomb unit may include at least one selected from the group consisting of alumina sol, silica sol, titania sol, water glass, sepiolite, and attapulgite.

Each honeycomb unit may further include inorganic fibers, and the inorganic fibers may be at least one selected from the group consisting of alumina, silica, silicon carbide, silica-alumina, glass, potassium titanate, and aluminum borate.

According to one aspect of the present invention, it is possible to provide a honeycomb structure less likely to have peeling-off or cracks caused at the interface of its honeycomb units and adhesive layer.

### BRIEF DESCRIPTION OF THE DRAWINGS

Other objects, features and advantages of the present invention will become more apparent from the following detailed description when read in conjunction with the accompanying drawings, in which:
FIG. 1 is a schematic perspective view of a honeycomb structure according to an embodiment of the present invention; and
FIG. 2 is a schematic perspective view of a honeycomb unit of the honeycomb structure of FIG. 1 according to the embodiment of the present invention.

### DETAILED DESCRIPTION OF THE PREFERRED EMBODIMENTS

A description is given below, with reference to the accompanying drawings, of an embodiment of the present invention.

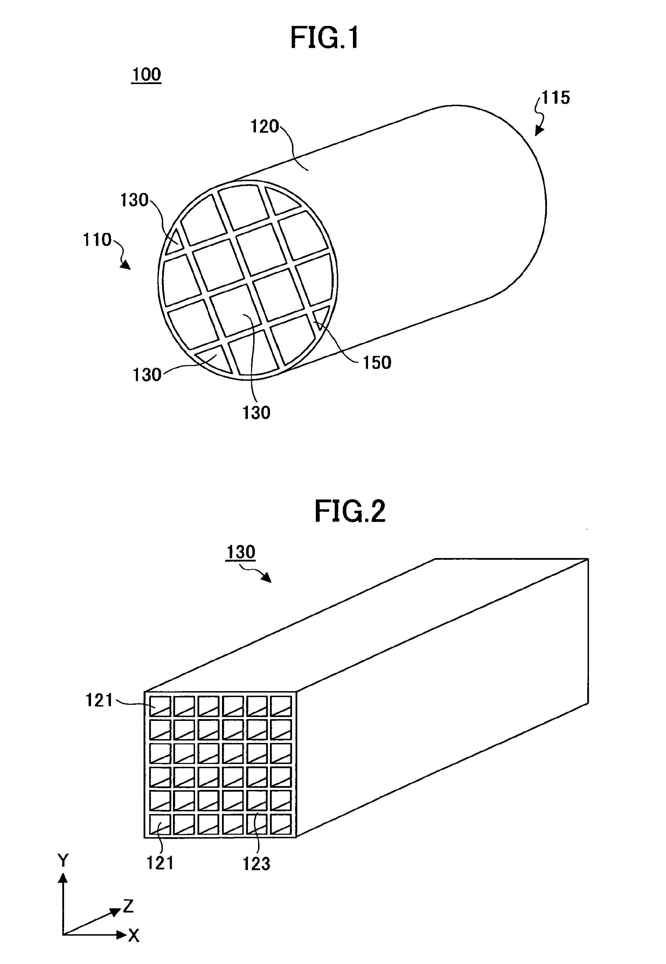

FIG. 1 is a schematic diagram illustrating a honeycomb structure according to the embodiment of the present invention. FIG. 2 is a schematic diagram illustrating a honeycomb unit that is the basic unit of the honeycomb structure illustrated in FIG. 1.

As illustrated in FIG. 1, a honeycomb structure 100 according to the embodiment of the present invention has two open (end) faces 110 and 115. Further, the honeycomb structure 100 has a peripheral coat layer 120 formed at its peripheral surface except for the end faces 110 and 115.

The honeycomb structure 100 is formed by, for example, joining multiple pillar ceramic honeycomb units 130 shown in FIG. 2 (16 units in a four-by-four matrix in the case of FIG. 1) by interposing an adhesive layer 150 and thereafter cutting the peripheral side along a predetermined shape (a cylindrical shape in the case of FIG. 1).

As illustrated in FIG. 2, the honeycomb unit 130 includes multiple cells (through holes) 121, extending from one end to another end of the honeycomb unit 130 along its longitudinal directions and having two open end faces, and cell walls 123 separating the cells 121. The honeycomb unit 130 contains zeolite, which contributes to conversion of NOx, as an SCR system. Accordingly, it is not always necessary to have the cell walls 123 support a noble metal catalyst in the case of using the honeycomb structure 100 according to the embodiment of the present invention as a catalyst support for NOx conversion. However, the cell walls 123 may further support a noble metal catalyst.

The honeycomb structure 100 thus configured is used as, for example, the catalyst carrier of a urea SCR system having a urea tank. When exhaust gas is caused to flow through this urea SCR system, the urea contained in the urea tank reacts with water in the exhaust gas to generate ammonia:

CO(NH₂)₂ + H₂O → 2NH₃ + CO₂. (1)

When this ammonia flows, together with exhaust gas including NOx, into each cell 121 from one of the open faces 110 and 115 (for example, the open face 110) of the honeycomb structure 100, the following reactions occur in this gas mixture on zeolite included in the cell walls 123:

4NH₃ + 4NO + O₂ → 4N₂ + 6H₂O, ... (2-1)

8NH₃ + 6NO₂ → 7N₂ + 12H₂O, ... (2-2)

2NH₃ + NO + NO₂ → 2N₂ + 3H₂O. ... (2-3)

Thereafter, the converted exhaust gas is discharged from another one of the open faces 110 and 115 (for example, the open face 115) of the honeycomb structure 100. Thus, by causing exhaust gas to flow inside the honeycomb structure 100, NOx in the exhaust gas can be treated. Here, a method is shown that supplies NH₃ by hydrolyzing urea water, but NH₃ may also be supplied by other methods.

It is often observed in the conventional honeycomb structure that peeling occurs at the interface of its honeycomb units and adhesive layer (hereinafter simply referred to as "interface") because of an increase in internal stress at the interface due to the difference in the coefficient of thermal expansion between the honeycomb units and the adhesive layer during the period of service of the honeycomb structure. Here, it is possible to prevent the peeling at the interface at the initial stage of use of the honeycomb structure by matching the coefficients of thermal expansion of the honeycomb units and the adhesive layer in advance. Even in this case, however, after the honeycomb structure is used for a long time, a high internal stress can result between the honeycomb units and the adhesive layer because of the difference in the degradation behavior over time of material characteristics between the honeycomb units and the adhesive layer, for example, the difference between sintering shrinkage rates. Therefore, there is a problem in that peeling occurs at the interface after using the honeycomb structure over a long period even if such a measure is taken.

On the other hand, the honeycomb structure 100 according to the embodiment of the present invention is formed so that its ratio of the coefficient of thermal expansion of the adhesive layer Aₐ to the coefficient of thermal expansion of the honeycomb unit Aₕ (the ratio Aₐ/Aₕ) is within the range of 0.8 to 1.2. In addition, both the honeycomb units 130 and the adhesive layer 150 of the honeycomb structure 100 according to the embodiment of the present invention are formed of a material prepared mainly of zeolite. Therefore, in the honeycomb structure 100 according to the embodiment of the present invention, the material characteristics of the honeycomb units 130 and the adhesive layer 150 show equality in degradation behavior over time during the period of use of the honeycomb structure 100. Accordingly, in the honeycomb structure 100 according to the embodiment of the present invention, the internal stress at the interface is controlled at the initial stage of its use, and an increase in the internal stress at the interface is also controlled even after its use over a long period.

Based at least on these effects, the honeycomb structure 100 according to the embodiment of the present invention can prevent peeling and/or cracks from being caused at the interface of the honeycomb units 130 and the adhesive layer 150 for a long period of time.

Each honeycomb unit 130 includes an inorganic binder in addition to zeolite. Further, the honeycomb unit 130 may further include inorganic particles other than zeolite and/or inorganic fibers.

Preferably, zeolite is, for example, β-zeolite, zeolite Y, ferrierite, zeolite ZSM-5, mordenite, faujasite, zeolite A, or zeolite L. Alternatively, zeolite may have Fe, Cu, Ni, Co, Zn, Mn, Ag, or V introduced therein through ion exchange.

Further, in zeolite, the ratio by weight of silica to alumina is preferably in the range of 30 to 50.

Inorganic sol, a clay-based binder, etc., may be used as the inorganic binder. Examples of the inorganic sol include alumina sol, silica sol, titania sol, water glass and the like. Examples of the clay-based binder include clay, kaolin, montmonrillonite, clays of a double-chain structure type such as sepiolite and attapulgite, and the like. These may be used alone or in combination.

Of these, at least one selected from the group consisting of alumina sol, silica sol, titania sol, water glass, sepiolite, and attapulgite is desirable.

The inorganic particles other than zeolite are desirably of alumina, silica, zirconia, titania, ceria, mullite, precursors thereof or the like. These particles other than zeolite may be used alone or in combination. Of these, alumina and zirconia are particularly desirable.

Further, in the case of adding inorganic fibers to the honeycomb unit 130, alumina, silica, silicon carbide, silica-alumina, glass, potassium titanate, aluminum borate or the like is desirable as the material of the inorganic fibers. These may be used alone or in combination. Of the above-described materials, alumina is desirable. Whiskers are also included in inorganic fibers.

With respect to the amount of inorganic particles (of zeolite and inorganic particles other than zeolite) included in the honeycomb unit 130, a desirable lower limit is 30 wt%, a more desirable lower limit is 40 wt%, and a still more desirable lower limit is 50 wt%, while a desirable upper limit is 90 wt%, a more desirable upper limit is 80 wt%, and a still more desirable upper limit is 75 wt%. If the inorganic particles content (of zeolite and inorganic particles other than zeolite) is less than 30 wt%, the amount of zeolite contributing to conversion is relatively reduced. On the other hand, if the inorganic particles content exceeds 90 wt%, the honeycomb unit strength may be reduced.

The inorganic binder included is preferably more than or equal to 5 wt%, more preferably more than or equal to 10 wt%, and still more preferably more than or equal to 15 wt% as solids content. On the other hand, the inorganic binder content is preferably less than or equal to 50 wt%, more preferably less than or equal to 40 wt%, and still more preferably less than or equal to 35 wt% as solids content. If the amount of the inorganic binder is less than 5 wt% as solids content, the manufactured honeycomb unit may be reduced in strength. On the other hand, if the amount of the inorganic binder exceeds 50 wt% as solids content, the moldability of the raw material composition may be degraded.

In the case of the honeycomb unit 130 including inorganic fibers, the total amount of the inorganic fibers has a lower limit of desirably 3 wt%, more desirably 5 wt%, and still more desirably 8 wt%, and has an upper limit of desirably 50 wt%, more desirably 40 wt%, and still more desirably 30 wt%. If the inorganic fibers content is less than 3 wt%, the contribution of the inorganic fibers to an increase in the honeycomb unit strength is reduced. If the inorganic fibers content exceeds 50 wt%, the amount of zeolite contributing to NOx conversion is relatively reduced.

The shape of a cross section of the honeycomb unit 130 perpendicular to its longitudinal directions is not limited in particular, and may be any shape as long as the honeycomb units 130 are joinable by interposing the adhesive layer 150. The shape of the cross section of the honeycomb unit 130 perpendicular to its longitudinal directions may also be square, rectangular, hexagonal, sectorial, etc.

Further, the shape of a cross section of each cell 121 of the honeycomb unit 130 perpendicular to its longitudinal directions is not limited in particular, and may be not only a square shape but also a triangular or polygonal shape.

The cell density of the honeycomb unit 130 is preferably in the range of 15.5-186 cells/cm² (100-1200 cpsi), more preferably in the range of 46.5-170 cells/cm² (300-1100 cpsi), and still more preferably in the range of 62-155 cells/cm² (400-1000 cpsi).

The thickness of the cell walls 123 of the honeycomb unit 130 is not limited in particular, but has a desirable lower limit of 0.1 mm in terms of strength and has a desirable upper limit of 0.4 mm in terms of conversion performance.

The honeycomb structure 100 according to the embodiment of the present invention may have any shape. For example, in addition to a cylindrical shape shown in FIG. 1, the honeycomb structure 100 may also have a shape such as a cylindroid, square pillar, or polygonal pillar.

The adhesive layer 150 of the honeycomb structure 100 is formed using adhesive layer paste as a raw material. The adhesive layer paste includes zeolite. The adhesive layer paste may further include inorganic particles other than zeolite, an inorganic binder, inorganic fibers and/or an organic binder.

The same materials as those forming the honeycomb unit 130 as described above may be used as the inorganic particles other than zeolite, inorganic binder, and inorganic fibers. The organic binder is not limited in particular, and may be one or more selected from, for example, polyvinyl alcohol, methylcellulose, ethylcellulose, carboxymethylcellulose, etc. Of the organic binders, carboxymethylcellulose is desirable.

It is preferable that the adhesive layer 150 be 0.3 to 2.0 mm in thickness. This is because if the thickness of the adhesive layer 150 is less than 0.3 mm, sufficient bonding strength may not be obtained. Further, if the thickness of the adhesive layer 150 exceeds 2.0 mm, pressure loss may be increased. The number of honeycomb units to be joined is suitably determined in accordance with the size of the honeycomb structure.

The peripheral coat layer 120 of the honeycomb structure 100 is formed using, as a raw material, paste including at least one of inorganic particles, an inorganic binder, and inorganic fibers. The paste forming the peripheral coat layer 120 may further include an organic binder. The materials forming the peripheral coat layer 120 may be either the same as or different from, but are preferably the same as those of the adhesive layer 150 because this makes occurrence of peeling or generation of cracks less likely the same as in the adhesive layer 150. The same kinds of inorganic particles, inorganic binder, and/or inorganic fibers as those of a material forming the honeycomb unit 130 may be used for and included in the peripheral coat layer 120. A pore-forming agent such as balloons, which are minute hollow balls whose component is oxide-based ceramic, spherical acryl particles, or graphite may be added as required to the paste serving as a raw material. The coat layer 120 preferably has a final thickness of 0.1 mm to 2.0 mm.

### [Method of Manufacturing Honeycomb Structure]

Next, a description is given of a method of manufacturing a honeycomb structure according to the embodiment of the present invention.

First, a honeycomb unit molded body is made by extrusion molding using raw material paste including inorganic particles including zeolite and an inorganic binder as principal components and further having inorganic fibers added as required.

In addition to these, an organic binder, a dispersion medium, and a molding aid may be suitably added to the raw material paste in accordance with moldability. The organic binder is not limited in particular. The organic binder includes one or more organic binders selected from, for example, methylcellulose, carboxymethylcellulose, hydroxyethylcellulose, polyethylene glycol, phenolic resin, epoxy resin and the like. The amount of the organic binder blended is preferably 1-10 parts by weight to the total of 100 parts by weight of the inorganic particles, inorganic binder, and inorganic fibers.

The dispersion medium is not limited in particular, and may be, for example, water, an organic solvent (such as benzene), alcohol (such as methanol), etc. The molding aid is not limited in particular, and may be, for example, ethylene glycol, dextrin, a fatty acid, fatty acid soap, polyalcohol and the like.

The raw material paste is not limited in particular, and is preferably subjected to mixing and kneading. For example, the raw material paste may be mixed using a mixer, attritor, or the like, and may be well kneaded with a kneader or the like. The method of molding the raw material paste is not limited in particular. It is preferable, for example, to form the raw material paste into a shape having cells by extrusion molding or the like.

Next, it is preferable to dry the obtained molded body. The drying apparatus used for drying is not limited in particular, and may be a microwave drying apparatus, hot air drying apparatus, dielectric drying apparatus, reduced-pressure drying apparatus, vacuum drying apparatus, freeze drying apparatus, or the like. Further, it is preferable to degrease the obtained molded body. The conditions for degreasing, which are not limited in particular and are suitably selected in accordance with the kind and amount of the organic matter included in the molded body, are preferably approximately 400 °C and 2 hours. Further, it is preferable to subject the obtained molded body to firing. The condition for firing is not limited in particular, and is preferably 600-1200 °C, and more preferably 600-1000 °C. This is because sintering does not progress at firing temperatures less than 600 °C, thus resulting in reduced strength as a honeycomb unit, and because sintering progresses excessively at firing temperatures more than 1200 °C, thus reducing zeolite reaction sites.

Next, adhesive layer paste to later serve as an adhesive layer is applied with uniform thickness on the side surfaces of the honeycomb unit obtained by the above-described processes, and thereafter, other honeycomb units are stacked one after another on the corresponding sides with this adhesive layer paste being interposed therebetween. By repeating this process, a honeycomb structure of a desired size (for example, having honeycomb units arranged in a four-by-four matrix) is made.

Next, this honeycomb structure is heated to dry and solidify the adhesive layer paste so as to form an adhesive layer and adhere and fix the honeycomb units to each other. Here, the coefficient of thermal expansion of the adhesive layer Aₐ is controlled to be 0.8 to 1.2 times the coefficient of thermal expansion of the honeycomb unit Aₕ. The coefficient of thermal expansion of the adhesive layer Aₐ is easily controllable by controlling the material of the inorganic particles other than zeolite included in the adhesive layer paste and their blending ratio.

Next, the honeycomb structure is cut into, for example, a cylindrical shape using a diamond cutter or the like, thereby making a honeycomb structure with a necessary peripheral shape.

Next, after applying peripheral coat layer paste on the peripheral surface (side surface) of the honeycomb structure, the peripheral coat layer paste is dried and solidified to form a peripheral coat layer.

It is preferable to degrease this honeycomb structure after joining the honeycomb units by interposing the adhesive layer (after forming the peripheral coat layer in the case of providing the peripheral coat layer). As a result of this treatment, if an organic binder is included in the adhesive layer paste and/or the peripheral coat layer paste, this organic binder can be removed by degreasing. The conditions for degreasing, which are suitably determined in accordance with the kind and amount of the included organic material, are usually approximately 700 °C and 2 hours.

By the above-described processes, the honeycomb structure 100 illustrated in FIG. 1 can be manufactured.

The cutting process may be omitted by manufacturing multiple differently-shaped honeycomb units and joining them into a predetermined shape by interposing an adhesive layer.

### [Examples]

A detailed description is given of the embodiment of the present invention based on examples.

### [Example 1]

First, 2250 parts by weight of Fe zeolite particles (2 µm in average particle size, a silica to alumina ratio by weight of 40), 960 parts by weight of zirconia particles (2 µm in average particle size), 2600 parts by weight of alumina sol (of a solids content of 30 wt%), 885 parts by weight of alumina fibers (100 µm in average fiber length and 6 µm in average fiber diameter), 410 parts by weight of methylcellulose, a plasticizer, and lubricant (UNILUB) were mixed and kneaded, so that a mixture composition (raw material composition) was obtained. The Fe zeolite particles had its part corresponding to 3 wt% of the zeolite weight exchanged with Fe ions. The exchange with Fe ions was performed by impregnating zeolite particles with an iron nitrate ammonium solution. The concentration of the iron nitrate ammonium solution was controlled so that zeolite included 3 wt% of Fe. β-zeolite was used as zeolite. The amount of ion exchange was determined by ICP (atomic emission spectrometry) using an apparatus ICPS-8100 (manufactured by Shimadzu Corporation).

Next, this mixture composition was subjected to extrusion molding with an extruder, so that honeycomb unit molded bodies were obtained.

Next, the molded bodies were sufficiently dried using a microwave drying apparatus and a hot air drying apparatus, and were degreased, being retained at 400 °C for 2 hours. Thereafter, the molded bodies were subjected to firing, being retained at 700 °C for 2 hours, so that honeycomb units (30 mm in height, 30 mm in width, and 150 mm in overall length) were obtained. The cell wall thickness was 0.25 mm, and the cell density was 78 cells/cm².

Next, 40 wt% of inorganic particles, 44 wt% of an inorganic binder, 9.5 wt% of inorganic fibers, and 6.5 wt% of methylcellulose were mixed and then 25 wt% of water was added to prepare adhesive layer paste. Zeolite particles (2 µm in average particle size) were used as inorganic particles, silica sol (of a solids content of 30 wt%) was used as an inorganic binder, and silica-alumina fibers (15 µm in average fiber length and 1 µm in average fiber diameter) were used as inorganic fibers.

This adhesive layer paste was applied on side surfaces of the honeycomb units manufactured by the above-described method, and the honeycomb units were joined to obtain a honeycomb assembly of two honeycomb units in height and width, that is, a total of four honeycomb units. The adhesive layer paste was applied evenly on the honeycomb units so that a finished adhesive layer was 1 mm in thickness, and was then heated at 120 °C to be solidified.

Next, peripheral coat layer paste (the same as the adhesive layer paste) was applied on the peripheral surface of the honeycomb assembly, and was heated and solidified to form a peripheral coat layer of 0.5 mm in thickness. By these processes, a honeycomb structure according to Example 1 (143.8 mm in outside diameter and 150 mm in overall length) was obtained.

### [Example 2]

A honeycomb structure was manufactured by the same method as in the case of Example 1. In Example 2, however, the adhesive layer paste used was prepared by mixing 40 wt% of zeolite particles (2 µm in average particle size), 44 wt% of alumina sol (of a solids content of 30 wt%), 9.5 wt% of silica-alumina fibers (15 µm in average fiber length and 1 µm in average fiber diameter), and 6.5 wt% of methylcellulose and further adding 25 wt% of water.

### [Example 3]

A honeycomb structure was manufactured by the same method as in the case of Example 1. In Example 3, however, the adhesive layer paste used was prepared by mixing 40 wt% of zeolite particles (2 µm in average particle size), 44 wt% of silica sol (of a solids content of 30 wt%), 9.5 wt% of mullite fibers (15 µm in average fiber length and 1 µm in average fiber diameter), and 6.5 wt% of methylcellulose and further adding 25 wt% of water.

### [Comparative Example 1]

A honeycomb structure was manufactured by the same method as in the case of Example 1. In Comparative Example 1, however, the adhesive layer paste used was prepared by mixing 40 wt% of zeolite particles (2 µm in average particle size), 44 wt% of alumina sol (of a solids content of 30 wt%), 9.5 wt% of aluminum borate fibers (15 µm in average fiber length and 1 µm in average fiber diameter), and 6.5 wt% of methylcellulose and further adding 25 wt% of water.

### [Comparative Example 2]

A honeycomb structure was manufactured by the same method as in the case of Example 1. In Comparative Example 2, however, the adhesive layer paste used was prepared by mixing 40 wt% of zeolite particles (2 µm in average particle size), 44 wt% of silica sol (of a solids content of 30 wt%), 9.5 wt% of alumina fibers (15 µm in average fiber length and 1 µm in average fiber diameter), and 6.5 wt% of methylcellulose and further adding 25 wt% of water.

### [Comparative Example 3]

A honeycomb structure was manufactured by the same method as in the case of Example 1. In Comparative Example 3, however, the adhesive layer paste used was prepared by mixing 40 wt% of alumina particles (2 µm in average particle size), 44 wt% of silica sol (of a solids content of 30 wt%), 9.5 wt% of aluminum borate fibers (15 µm in average fiber length and 1 µm in average fiber diameter), and 6.5 wt% of methylcellulose and further adding 25 wt% of water.

### [Comparative Example 4]

A honeycomb structure was manufactured by the same method as in the case of Example 1. In Comparative Example 4, however, the adhesive layer paste used was prepared by mixing 40 wt% of silica particles (2 µm in average particle size), 44 wt% of silica sol (of a solids content of 30 wt%), 9.5 wt% of silica-alumina fibers (15 µm in average fiber length and 1 µm in average fiber diameter), and 6.5 wt% of methylcellulose and further adding 25 wt% of water.

Table 1 shows the composition of the adhesive layer of each of Examples 1 to 3 and Comparative Examples 1 to 4.

**Table 1**

| | ADHESIVE LAYER COMPONENT | | | COEFFICIENT OF THERMAL EXPANSION OF ADHESIVE LAYER Aa (×10⁻⁶/K) | RATIO OF COEFFICIENT OF THERMAL EXPANSION OF ADHESIVE LAYER Aa TO COEFFICIENT OF THERMAL EXPANSION OF HONEYCOMB UNIT Ah (Aa/Ah) | THERMAL SHOCK TEST RESULT |
|---|---|---|---|---|---|---|
| | INORGANIC PARTICLES | INORGANIC BINDER | INORGANIC FIBERS | | | |
| EXAMPLE 1 | ZEOLITE | SILICA SOL | SILICA - ALUMINA | 2.8 | 0.82 | ○ |
| EXAMPLE 2 | ZEOLITE | ALUMINA SOL | SILICA - ALUMINA | 3.1 | 0.91 | ○ |
| EXAMPLE 3 | ZEOLITE | SILICA SOL | MULLITE | 4.1 | 1.19 | ○ |
| COMPARATIVE EXAMPLE 1 | ZEOLITE | ALUMINA SOL | ALUMINUM BORATE | 2.3 | 0.68 | × |
| COMPARATIVE EXAMPLE 2 | ZEOLITE | SILICA SOL | ALUMINA | 4.6 | 1.35 | × |
| COMPARATIVE EXAMPLE 3 | ALUMINA | SILICA SOL | ALUMINUM BORATE | 3.8 | 1.12 | × |
| COMPARATIVE EXAMPLE 4 | SILICA | SILICA SOL | SILICA - ALUMINA | 3.1 | 0.91 | × |

| | | | | | | |
|---|---|---|---|---|---|---|
| (NOTE) COEFFICIENT OF THERMAL EXPANSION OF HONEYCOMB UNIT Ah IS 3.4 × 10⁻⁶/K | | | | | | |

### [Measurement of Coefficient of Thermal Expansion]

The coefficients of thermal expansion of the honeycomb unit and the adhesive layer of each of Examples 1 to 3 and Comparative Examples 1-4 were evaluated by the following method.

First, a measurement sample simulating the honeycomb unit was manufactured in the same process as the above-described honeycomb unit manufacturing method. Likewise, a measurement sample simulating the adhesive layer was made by heating the adhesive layer paste of the above-described composition at 120 °C and solidifying it. The dimensions of each measurement sample were 3 mm in height, 3 mm in width, and 15 mm in length.

Next, the measurement samples and an alumina reference sample (3 mm × 3 mm × 15 mm) were placed side by side in an airtight container with the longitudinal directions of the samples being horizontal directions. For each sample, a detection rod was provided so as to be in contact with the center portion of its upper surface (that is, the 3 mm × 15 mm upper area).

Next, in an argon atmosphere, the measurement samples and the reference sample had their temperatures increased from room temperature to 700 °C at a temperature increase rate of 5 °C per minute, and then were cooled naturally to room temperature after being retained at 700 °C for 20 minutes. In this case, the measurement samples and the reference sample expand thermally, and these changes are detected by the corresponding detection rods. Accordingly, the coefficient of thermal expansion of each measurement sample is determined from the difference in change between the measurement sample and the reference sample.

A thermal dilatometer (DL-7000, manufactured by ULVAC-RIKO, Inc.) was used for the measurement. The minimum detection sensitivity of this apparatus is 0.1 µm.

As a result of the measurements, the coefficient of thermal expansion of the honeycomb unit Aₕ was 3.4 × 10⁻⁶/K. On the other hand, the coefficients of thermal expansion of the adhesive layers Aₐ varied from 2.3 × 10⁻⁶ to 4.6 × 10⁻⁶/K. Table 1 collectively shows the coefficient of thermal expansion of the adhesive layer Aₐ and the ratio of the coefficient of thermal expansion of the adhesive layer Aₐ to the coefficient of thermal expansion of the honeycomb unit Aₕ (Aₐ/Aₕ) in each of Examples 1 to 3 and Comparative Examples 1 to 4.

### [Thermal Shock Test]

A thermal shock test was conducted on each of the honeycomb structures of Examples 1 to 3 and Comparative Examples 1 to 4 manufactured in the above-described manner by the following method.

An alumina mat of 15 cm in width and 46.5 cm in length (6 mm in thickness) (manufactured by Mitsubishi Chemical Corporation) was put around the entire peripheral surface of the honeycomb structure as a holding sealing material, and the honeycomb structure was attached to a metal casing. This metal casing was put in an electric furnace maintained at 600 °C and retained for 10 minutes. Thereafter, the honeycomb structure was extracted from the furnace and cooled to room temperature (natural cooling). This operation was repeated 10 times.

After the thermal shock test, it was visually determined whether peeling or a crack had been caused in the honeycomb structure. Table 1 shows the thermal shock test result in each of Examples 1 to 3 and Comparative Examples 1 to 4. A circle indicates that neither peeling nor cracking was caused in the honeycomb structure after the thermal shock test, and a cross indicates that peeling or a crack was caused in the honeycomb structure after the thermal shock test.

The thermal shock test saw generation of a crack in Comparative Examples 1 and 2. It is believed that this is due to a large difference in the coefficient of thermal expansion between the honeycomb unit and the adhesive layer.

The thermal shock test saw occurrence of peeling in Comparative Examples 3 and 4. It is believed that peeling occurred because of an increase in the difference in the degree of degradation between the honeycomb unit and the adhesive layer caused by a repeated application of thermal shock because the honeycomb unit and the adhesive layer included different types of inorganic particles.

These results show that the honeycomb structure presents good resistance to thermal shock in the case where the ratio of the coefficient of thermal expansion of the adhesive layer to the coefficient of thermal expansion of the honeycomb unit (Aₐ/Aₕ) is in the range of 0.8 to 1.2 and the adhesive layer includes zeolite.

The honeycomb structure according to the embodiment of the present invention can be used for conversion of exhaust gas, in particular, automobile exhaust gas, and can be used effectively in NOx conversion systems, in particular, SCR systems.

## Claims

1. A honeycomb structure including a plurality of pillar honeycomb units joined by interposing an adhesive layer, the honeycomb units each including zeolite and an inorganic binder and having a plurality of cells separated by a cell wall, the cells extending from a first end face to a second end face of the honeycomb unit along a longitudinal direction thereof, **characterized in that:**
the adhesive layer includes the zeolite; and
a ratio of a coefficient of thermal expansion of the adhesive layer to a coefficient of thermal expansion of each of the honeycomb units is in a range of 0.8 to 1.2.

2. The honeycomb structure as claimed in claim 1, **characterized in that** the zeolite is ion-exchanged with one of Fe, Cu, Ni, Co, Zn, Mn, Ti, Ag, and V.

3. The honeycomb structure as claimed in claim 1 or 2, **characterized in that** the zeolite is one of β-zeolite, zeolite Y, ferrierite, zeolite ZSM-5, mordenite, faujasite, zeolite A, and zeolite L.

4. The honeycomb structure as claimed in any of claims 1 to 3, **characterized in that** a ratio by weight of silica to alumina is 30 to 50 in the zeolite.

5. The honeycomb structure as claimed in any of claims 1 to 4, **characterized in that** each of the honeycomb units further includes at least one selected from the group consisting of alumina, titania, silica, zirconia, ceria, mullite, and precursors thereof.

6. The honeycomb structure as claimed in any of claims 1 to 5, **characterized in that** the inorganic binder includes at least one selected from the group consisting of alumina sol, silica sol, titania sol, water glass, sepiolite, and attapulgite.

7. The honeycomb structure as claimed in any of claims 1 to 6, **characterized in that** each of the honeycomb units further includes inorganic fibers.

8. The honeycomb structure as claimed in claim 7, **characterized in that** the inorganic fibers are at least one selected from the group consisting of alumina, silica, silicon carbide, silica-alumina, glass, potassium titanate, and aluminum borate.
